Europäisches Patentamt

European Patent Office

Office européen des brevets

(11) Publication number: **0 458 281 A1**

# (12) EUROPEAN PATENT APPLICATION

(21) Application number: **91108210.5**

(22) Date of filing: **21.05.91**

(51) Int. Cl.⁵: **B65G 47/46, B07C 5/14**

(30) Priority: **21.05.90 FI 902513**

(43) Date of publication of application:
**27.11.91 Bulletin 91/48**

(84) Designated Contracting States:
**AT DE FR SE**

(71) Applicant: **PLANOX OY**
**Reumantie 4**
**SF-18100 Heinola(FI)**

(72) Inventor: **Meriläinen, Heikki**
**Rullantie 8 K**
**SF-18130 Heinola(FI)**

(74) Representative: **Patentanwälte Grünecker,**
**Kinkeldey, Stockmair & Partner**
**Maximilianstrasse 58**
**W-8000 München 22(DE)**

(54) **Apparatus for treating sawn goods.**

(57) The invention relates to an apparatus for treating sawn goods after sawing, for further measures such as cutting, measuring, quality control or the like. The apparatus comprises a flight conveyor (7), which includes a number of flight intervals (9) separated from each other by means of flight nodules (8) for receiving the sawn goods. The apparatus also comprises a ranging device (24), a control device (25) and a sorting device (17). The ranging device is formed of a hoist guide (11) and a brush (12), by means of which the sawn goods are distributed from one flight interval to several flight intervals. The control device includes two sensors (14, 15) for detecting the existence of a sawn piece, possibly several pieces, in the flight interval (9) of the flight conveyor (7). The pieces proved acceptable on the basis of the information received from the sensors (14, 15) are allowed to proceed on the conveyor (7, 21) past the sorting device (17) to further treatment of sawn goods. All pieces possibly causing disturbance in the further treatment, and/or proved defective, are shifted aside from the conveyor (7) by means of the sorting device (17).

EP 0 458 281 A1

Fig.1

The present invention relates to the apparatus defined in the introductory section of patent claim 1.

In the following the term 'sawn goods' or 'sawn pieces'denotes to any sawn timber such as boards, spars, strips etc.

From the sawing site where a log is sawn, the sawn goods are further transported to the log haul, wherefrom the sawn goods are hoisted, one by one, onto a flight conveyor, in order to be transported to futher processing of sawn goods.

The sorting of unedged sawn goods is a very slow process and requires continuous surveillance. In an ordinary log haul, the sorting rate of sawn goods is 25 pieces per minute at the most. A further problem in a log haul is that the sawn goods are easily scratched and even broken while being hoisted onto the flight conveyor. Moreover, several pieces may fall in one and the same flight interval of the conveyor, or some flight intervals may remain altogether empty.

A defective piece, such as a strong compression wood, spindling or a sawn piece broken at several spots causes trouble in the treatment of sawn goods. Another drawback is that in spite of everything, one separate flight interval may contain at least two pieces of sawn goods. This problem is particularly emphasized when a defective piece falls to the same flight interval with a faultless piece.

The object of the present invention is to eliminate the above mentioned drawbacks. A particular object of the invention is to introduce an apparatus for treating sawn goods, whereby the treatment of sawn goods in connection with sawing is suggested to be automated. In addition to this, the object of the invention is to bring forth an apparatus which is simple and by means of which all pieces causing disturbance in further processing and all defective pieces can be reliably separated from viable pieces and those arranged correctly in the flight intervals.

The apparatus of the invention is characterized by the novel features enlisted in the patent claim 1.

In the apparatus of the invention for treating sawn goods, the further measures after sawing, such as cutting, measuring, quality control and other such procedures, there is provided a plane conveyor provided with a number of flight intervals, separated by flight nodules, for receiving the sawn goods. According to the invention, the apparatus comprises a ranging device provided with an adjusting device, which is arranged to adjust the mutual height of the sawn piece and the free end of the flight nodule, and a stopping member arranged to slow down or to stop the motion of at least one sawn piece with respect to the conveyor and to another sawn piece, so that the sloweddown or stopped piece is shifted, over the flight nodules, to the next flight interval in succession with respect to the moving direction of the plane conveyor.

In a preferred embodiment of the invention, the stopping member is a brush, which is arranged essentially transversally with respect to the conveyor. The brush is arranged crosswise over the conveyor path, so that the bristles are directed downwards and touch the sawn goods proceeding underneath. In addition to the fact that the brush sorts the sawn pieces out to separate flight intervals, it brushes the pieces clear of cuttings and other litter.

In another preferred embodiment of the invention, the adjusting device is a hoist guide. The hoist guide is located at a given point prior to the stopping member, in the proceeding direction of the conveyor. Advantageously the height of the hoist guide is adjustable in relation to the plane of the conveyor. The height of the hoist guide can be adjusted to be suitable with respect to the thickness of the sawn goods under treatment.

In another preferred embodiment of the invention, the brush is vertically adjustable in order to regulate the sorting strength.

In another preferred embodiment of the invention, the height of the flight nodule is essentially twofold with respect to the height of the sawn goods, and the height of the hoist guide is essentially equal or larger than that of the sawn goods.

In another preferred embodiment of the invention, the apparatus includes a control device, which comprises a first sensor, at least for detecting the existence of a sawn piece in the flight interval of the flight conveyor, and a second sensor, at least for detecting any superimposed sawn pieces; and a sorting device; and on the basis of the information received from the first and second sensors, a sawn piece which is proved viable is allowed to proceed on the conveyor past the sorting device to further processing of sawn goods, and any pieces causing disturbance in the further processing, and/or pieces proved defective, are shifted aside from the conveyor by means of the sorting device.

The first and second sensor of the control device can be realized in many different ways. The sensors can be mechanical or electro-optical sensors, which, by means of suitable sensing members, such as levers or such members as do not touch the piece under inspection, observe the edge and surface of the sawn piece proceeding on the conveyor, in order to define the edge line and respectively the height of the piece in question.

The control device is arranged immediately after the ranging device, and the purpose thereof is to check whether there exists a sawn piece in given flight intervals, whether the said piece is faultless and if so, whether there are several pieces on top of each other. If the piece is defective, or there are at least two pieces superimposed in one and the same flight interval, the said piece is shifted aside by means of the sorting device and transported from the conveyor to separate treatment.

The first sensor observes above all the existence of sawn pieces in the flight intervals. In addition to this, there can be observed defects like deviations in the form of the piece, particularly in the form of the edge line, such as shortness of the piece, a strong compression, bending and other such defects.

The second sensor observes whether there are two or more pieces superimposed in one and the same flight interval. Moreover, the second sensor can be used for observing the quality of the pieces, such as straightness of the piece, and particularly the turning upward of the top section.

While employing both sensors together, the evaluation criteria can be improved, so that in one flight interval of the plane conveyor, there is observed the existence of two or more sawn pieces. This is carried out for instance so, that the first sensor observes an empty flight interval at a group of sawn pieces where the pieces should be located, according to obtained information, in successive flight intervals. The obtained information is based on the sawing process, whereafter the sawn goods are arranged according to the invention. On the basis of an empty flight interval it can be deducted that at least part of this group of sawn pieces is located in the adjacent flight interval. If the second sensor observes superimposed pieces in this adjacent interval, the said pieces are taken aside by means of the sorting device, and their proceeding to the normal further treatment of sawn goods is prevented. If the second sensor does not register superimposed pieces, the whole group of sawn goods, i.e. the content of several successive flight intervals, can be shifted aside by means of the sorting device. The decision-making process can be arranged in the data processing unit. The disturbing pieces can be checked manually, and all acceptable pieces can be returned to further processing.

In another preferred embodiment of the invention, the first sensor comprises a photocell unit, which is arranged transversally with respect to the moving direction of the flight conveyor, and at an angle with respect to the plane of the conveyor. By means of the light curtain of this sensor, the intervals between the flight nodules are scanned, and all deviations from the normal shapes of the pieces are registered.

In another preferred embodiment of the invention, the second sensor comprises a photocell unit, which is arranged transversally with respect to the moving direction of the flight conveyor, on a parallel level with the flight conveyor, at a distance from the conveyor plane. By means of this sensor it is easily observed whether the thickness of the piece transported in the flight conveyor, or possibly the thickness of several superimposed pieces, surpasses a preset value corresponding to the thickness of a sawn piece.

In another preferred embodiment of the invention, the distance of the photocell unit from the shifting level of the conveyor is adjustable; in this case the apparatus can be easily used for treating both thick and thin pieces in turn.

In another preferred embodiment of the invention, the sorting device includes an intermediate conveyor, which is turnable aside for transporting sawn goods from the flight conveyor to amongst the rejected pieces. Usually the intermediate conveyor is placed in between two flight conveyors, and most advantageously it is a plane conveyor, which is turnable from a high position to a low position. By employing the sorting device, all such pieces are shifted aside from the plane conveyor proper which could later disturb the normal treating process of sawn goods, such as trimming and classification.

In another preferred embodiment of the invention, underneath the intermediate conveyor there is arranged a discharge conveyor, which is most advantageously a longitudinal conveyor, in order to transport disturbing pieces aside. Rejected pieces are dropped onto the discharge conveyor, whereby the pieces are transported, past the eyes of an inspector, directly to amongst rejected timber, or, if the inspector so decides, back to the flight conveyor, to a suitable flight interval thereof.

In yet another preferred embodiment of the invention, the apparatus comprises a data processing unit, which receives messages from the first and second sensors and commands the sorting device, on the basis of the evaluation criteria recorded in its memory, to shift a given piece to further processing or aside, to among the disturbing pieces. The data processing unit can be a logic circuit, or a more complex device, such as a microprocessor with connected circuits, which also may have other functions and devices connected to the treatment of sawn goods under its surveillance and control. In the memory of the data processing unit, there are recorded various evaluation criteria, on the basis whereof the messages received from the sensors can be evaluated. The said evaluation criteria has been dealt with for instance above.

It is an advantage of the invention that the ranging of sawn goods becomes a very rapid process, which is carried out simultaneuously as the goods are conveyed on a conveyor, and the pieces do not have to be stored in any heaps. When the treatment rate of unedged sawn goods in a log haul is about 25 pieces per minute, the apparatus of the invention achieves a treatment rate of roughly 60 - 70 pieces per minute.

Moreover, owing to the invention the surface of the sawn goods is not damaged under the treatment.

Another advantage of the invention is that it ensures that in each flight interval, there is only one piece suitable for further treatment.

Another advantage of the invention is that instead of human surveillance, it enables the shifting over to mainly automated inspection of sawn goods.

Further, owing to the invention the further treatment processes of sawn goods are made secure and more rapid, and interruptions are prevented, by shifting rejected and generally disturbing pieces aside in time.

Yet another advantage of the invention is that the apparatus is adjustable in many respects.

Yet another advantage of the invention is that the apparatus is relatively simple, which leads to a high security in operation and an easy maintenance.

In the following the invention is explained in more detail with reference to the appended drawings, where

figure 1 is a schematical overall illustration of the apparatus of the invention, comprising a ranging device, a control device and a sorting device, which are arranged in a plane conveyor in order to treat sawn goods after the sawing process; and

figures 2 - 11 are schematical side-view illustrations of the a preferred embodiment of the ranging device, in the various stages of the arrangement.

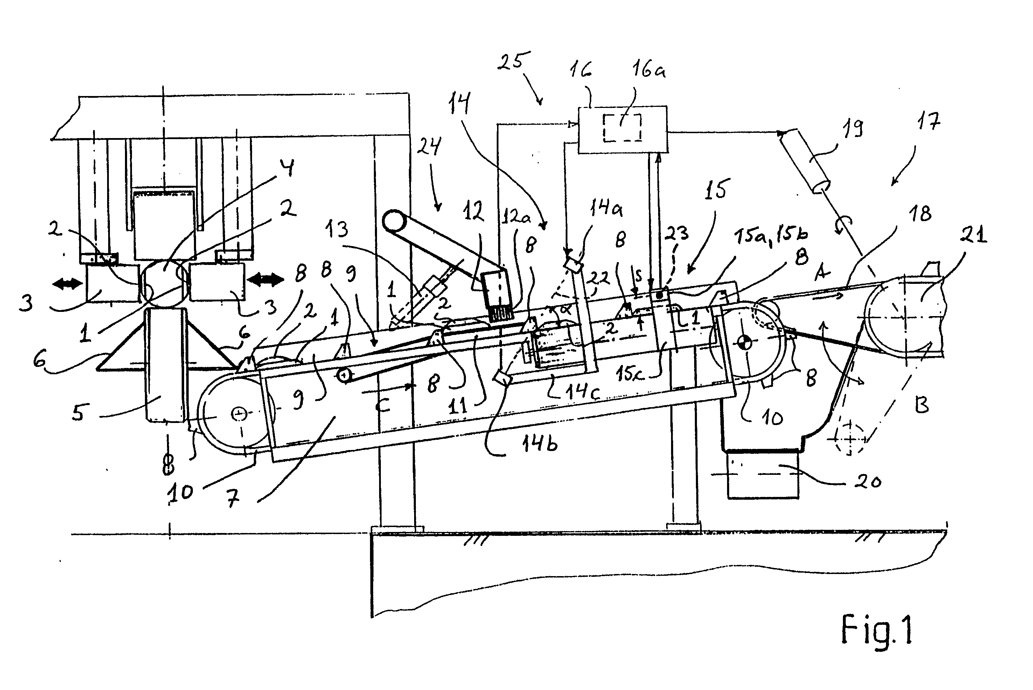

Figure 1 illustrates the treatment of sawn goods immediately after the sawing process. After the sawing of a log, the pieces 1, 2, in this case boards, are held pressed against the sides of the block 4 by means of side pressure carriages 3, as far as the dropping spot. In this case the side pressure carriages 3 serve as batching means. The side pressure carriages 3 are turned outwards from the block at the dropping spot, whereafter the pieces fall, along the slide ramps 6 located on both sides of the log shift 5, onto the first plane conveyor such as the flight conveyor 7. In the drawing, there is illustrated only one of the flight conveyors 7 together with connected devices. The second plane conveyor, such as a flight conveyor, is advantageously similar to the first, and is located on the other side of the log shift 5, in connection with the second slide ramp.

The flight conveyor 7 is a cassette conveyor, where by means of endless chains 10 there are shifted flight nodules 8 located at given distances from each other, and sawn pieces 1, 2 dropped in the flight intervals 9 in between the flight nodules 8, towards further processing of sawn goods.

The side pressure carriages 3 are used for batching the sawn boards or pairs of boards on the flight conveyor 7, so that at least every second flight interval 9 remains empty. Thus the flight intervals 9 may contain one or two sawn pieces 1, 2. If the flight interval 9 contains two pieces, they may be located adjacently or superimposed or partly superimposed. In both cases the pieces must be arranged in individual flight intervals, i.e. one piece per one interval, in order to subject the pieces to the predetermined further treatment.

The ranging device 24 is provided in connection with the flight conveyor 7 in order to arrange each of the pieces 1, 2 in their individual flight intervals 9. The ranging device 24 includes an adjusting device, such as a stationary hoist guide 11, which is arranged to set the mutual height position of the sawn piece 1, 2 and the free end of the flight nodule 8, and a stopping device, such as the brush 12, which is arranged to slow down or to stop the motion of at least one sawn piece 2 with respect to the conveyor 7 and to the second sawn piece 1, so that the slowed-down or stopped piece 2 is shifted, over the flight nodules 8, to the adjacent flight interval.

The brush 12 is arranged transversally above the conveying path of the flight conveyor 7, and it is adjustable in height with respect to the conveyor by means of the cylinder 13. The bristles 12a of the brush 12 are directed downwards, and they touch the piece 2 conducted underneath at least when the said piece is located on top of the hoist guide 11 and the other piece 1. The bristles 12a are flexible and do not damage the surface of the pieces while touching, but they are however sufficiently stiff to create a strength for slowing down or stopping the piece. In addition to arranging the sawn pieces to separate flight intervals, it brushes the pieces clear of cuttings and other litter.

The hoist guide 11 is located at a given location prior to the brush 12 in the proceeding direction of the conveyor 7. Advantageously the height of the hoist guide 11 is adjustable with respect to the level of the conveyor 7. The height of the hoist guide 11 can be adjusted to be suitable with respect to the thickness of the sawn pieces under treatment. Generally the height of one flight nodule 8 is at least twofold in comparison to the thickness of the sawn piece, and the height of the hoist guide 11 is essentially equal or larger than the thickness of the sawn piece.

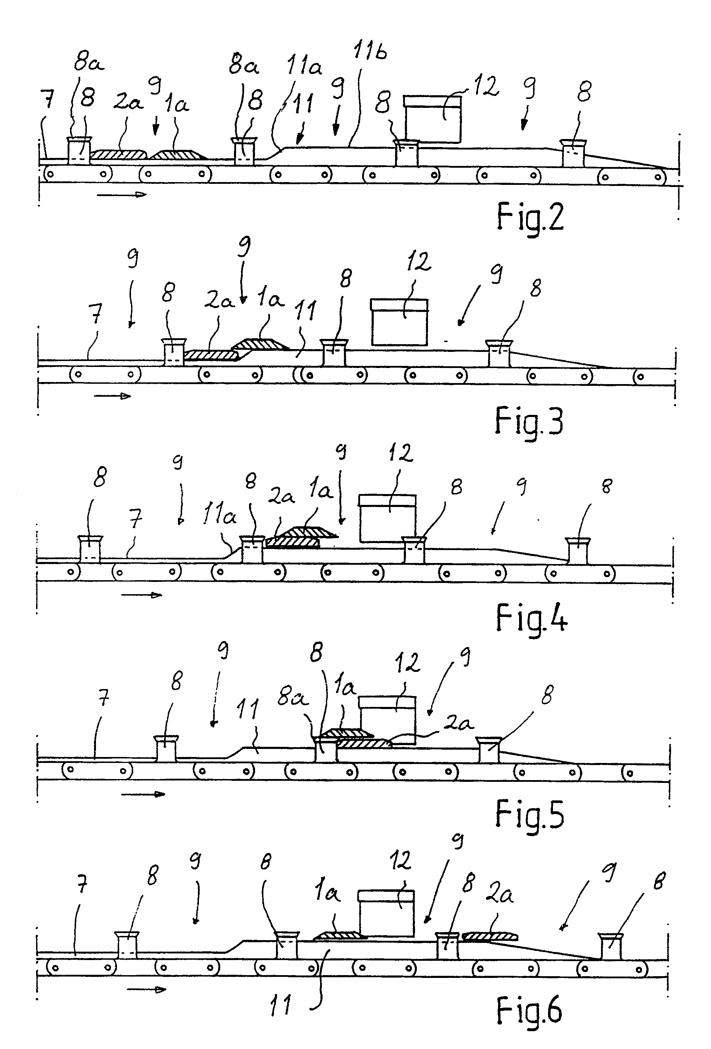

Figures 2 - 7 illustrate the operation of the ranging device 24 in cases where there are two boards 1a and 2a located side by side in a flight interval 9. Figure 2 illustrates the starting position, when the flight interval 9 contains two adjacent boards, which must be shifted to individual intervals, so that there will be only one board in each interval. In figure 3, the hoist guide 11 has lifted the board 1a, coming first while the conveyor 7 proceeds in the direction of the arrow, onto the hoist guide 11, which is advantageously formed of a short, inclined part 11a and of a horizontal plane surface 11b. Because the hoist guide 11 does not move with respect to the conveyor 7, it stops the first board 1a on top of its plane surface 11b for instance in the fashion shown in figure 3, so that only part of the lower edge of the board is supported by the horizontal plane 11b, and it partly hangs over empty space. The second board 2a proceeding in the same flight interval is now pushed, by the flight nodule 8, to under the first board 1a, so that the boards 1a and 2a are set on top of each other. The height of the flight nodule 8 is so adjusted, that it is smaller or equal to the thickness of one board 1a, 2a. Consequently, when the boards 1a, 2a are superimposed, the flight nodule is in contact with the lower board 2a only.

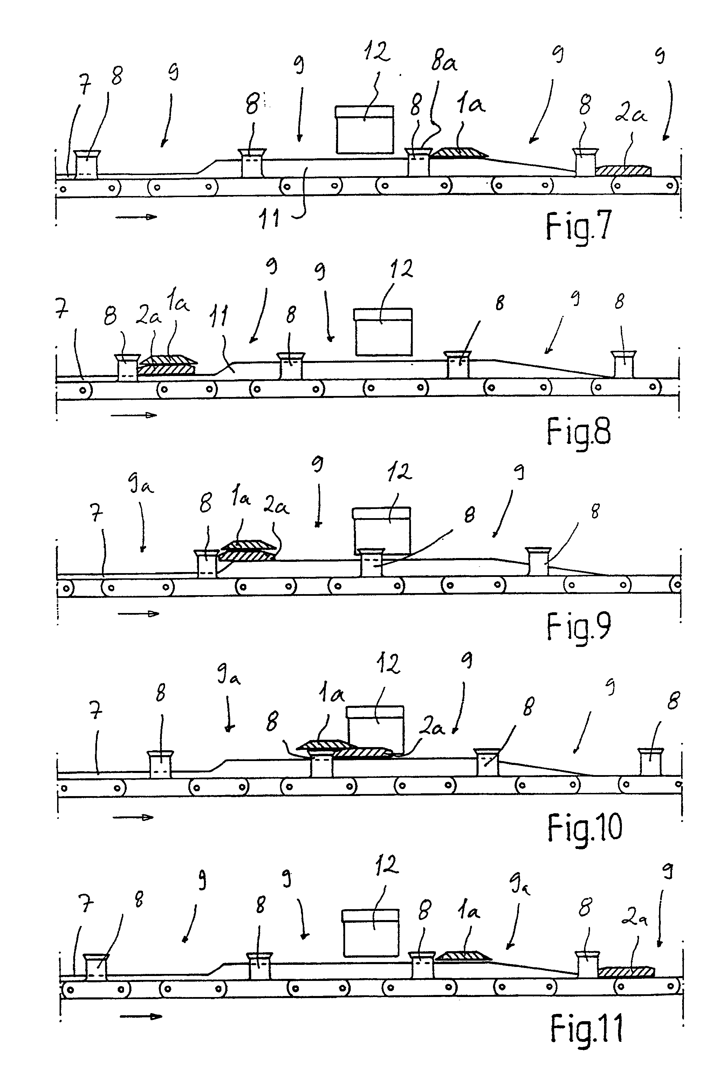

Then the boards 1a and 2a are further conveyed, in the fashion illustrated in figure 5, on top of the horizontal plane 11b of the hoist guide 11 to as far as the brush 12, which slows down or stops the topmost, first board 1a with respect to the conveyor 7 and the second board 2a, so that the topmost board 1a is shifted, over the free end 8a of the flight nodule 8, to the adjacent flight interval 9a therebehind, and now each of the boards 1a and 2a are arranged in respective separate flight intervals 9, 9a (figures 6 and 7).

Figures 8 - 11 illustrate a case where the boards 1a and 2a already are located on top of each other in the flight interval 9 of the conveyor 7 while reaching the hoist guide 11 (figure 8). Now the boards 1a and 2a are lifted, naturally superimposed, onto the hoist guide 11, and shifted, pushed by the flight nodule 8, as far as the brush 12 (figure 9). While the conveyor 7 continues to move, the brush 12 pushes the topmost board 1a, in similar fashion as in the previous example, to the flight interval 9a behind (figure 10). Figure 11 illustrates the final situation, where the boards 1a and 2a are located each in its separate flight interval 9, 9a.

The control device 25 is arranged after the above described ranging device 24 in connection with the flight conveyor 7. The control device 25 comprises a first sensor 14 and a second sensor 15. The sensors 14, 15 are connected to the data processing unit 16 and further to the sorting device 17.

The first sensor 14 is formed of a photocell unit including transmitters 14a and receivers 14b. These are arranged transversally with respect to the moving direction C of the flight conveyor 7, and at an angle α with respect to the level of the flight conveyor, and attached to a suitable rack 14c. According to this arrangement, there is created a planar light curtain 22 through the shifting plane of the flight conveyor 7.

The second sensor 15 which is arranged in connection with the same flight conveyor 7, at a distance from the first sensor 14, comprises a photocell unit provided with a transmitter 15a and reciever 15b respectively. They are arranged transversally with respect to the moving direction C of the flight conveyor 7, and on a level parallel to the flight conveyor 7, at a distance s from the shifting level of the conveyor 7. The distance s of the photocell unit 15 from the shifting level of the conveyor 7 can be adjusted by moving both the transmitter 15a and the receiver 15b along their vertical support structures 15c to a suitable height.

The sorting device 17 comprises an intermediate conveyor 18. It is turnable, by means of a turning device 19, from the top position A to the low position B (indicated by dotted lines in figure 1) in order to drop the pieces 1, 2 from the flight conveyor to among rejected timber, if the turning device 19 is employed in this fashion.

The data processing unit 16 includes a logic circuit 16a, which receives messages from the first sensor 14 and the second sensor 15. The logic circuit controls the turning device 19 and thereby the intermediate conveyor 17 in between the top position A and the low position B on the basis of received messages.

Underneath the intermediate conveyor 17, there is arranged a longitudinal conveyor 20. This conveyor shifts rejected pieces, i.e. disturbing pieces, to the area reserved for them.

After the first flight conveyor 7, in succession to the intermediate conveyor 18, there comes the second flight conveyor 21. Onto this conveyor there are shifted those pieces which are accepted to further treatment, by using the intermediate conveyor 18 when it is in the top position A.

The control device 25 is operated as follows. The pieces are arranged, by means of the hoist guide 11 and brush 12 of the ranging device 24, so that there is one piece in each flight interval 9 of the flight conveyor 7. Thereafter the pieces 1, 2 are transported, in their respective flight intervals, one by one, on the conveyor 7 to within the reach of the first sensor 14 of the control device 25. On the basis of the light screen or curtain 22 of the photocell unit 14a, 14b thereof, there is defined the shape of the edge of the piece 1, 2 under treatment, for instance by registering at regular intervals the length of the unbroken light beam of the photocell, its possible breaking spots and other irregularities. This information is transmitted to the data processing unit 16 to be processed further. By employing the said sensor 14, the existence or non--existence of a piece in the flight interval 9 is also detected.

In the next stage, the piece 1, 2 is transported to within the detection range of the nearby second sensor 15. By means of its photocell unit 15a, 15b it is observed whether there are two or more sawn pieces on top of each other. The distance s of the light beam 23 of the photocell unit from the conveying plane of the flight conveyor 7 is adjusted to be such, that a sawn piece of the allowed thickness is able to pass under the light beam 23 of the photocell unit without breaking it, whereas two superimposed pieces cause a break in the light beam. This break is detected, and it is fed as a message to the data processing unit 16.

The data processing unit 16 processes the information obtained from the sensors 14, 15, and decides, on the basis of the preliminary data, i.e. the evaluation criteria fed in the memory, whether the checked sawn piece can be allowed to proceed via the intermediate conveyor 18 to the second flight conveyor 21 and to further processing, or should it be taken aside. Advantageously the employed criteria is the successive location of pieces in the flight intervals, on the basis of which information particular attention can be paid to a superimposed position of pieces. The pieces are transported from the sawing site to certain flight intervals, and in between separate groups of sawn pieces there can be empty flight intervals. If there are empty fligh intervals in wrong places, there is reason to doubt that some of the flight intervals contain pieces side by side or on top of each other. The existence of several pieces in one and the same flight interval cannot be detected directly, but the second sensor detects possible superimposed positions. However, the flight intervals belonging to a given group of sawn goods can always be taken aside by means of the intermediate conveyor 18, if there is reason to doubt that there are several pieces in one and the same interval.

If the pieces are located in correct intervals and they are proved to be acceptable, they are shifted by the intermediate conveyor 18 onto the second flight conveyor 21. If unacceptable defects are detected in a piece, or there are several pieces on top of each other in one and the same flight interval, the data processing unit 16 sends a command for the turning device 19 to turn the intermediate conveyor 18 from the top position A to the low position B, so that the piece coming from the second sensor 15 is dropped from the first flight conveyor 7 down onto the longitudinal conveyor 20. The longitudinal conveyor 20 shifts the pieces aside.

Those pieces that are taken aside are once more checked by the inspecting personnel. Acceptable pieces can thereafter be fed back to the process, and rejected goods for instance to chipping.

The invention is not limited to the above described preferred embodiments only, but many modifications are possible within the scope of the inventional idea defined in the appended patent claims.

## Claims

1. An apparatus for treating sawn goods after sawing, for further measures such as cutting, measuring, quality control and other such procedures, the said apparatus comprising a plane conveyor (7), provided with a number of flight intervals (9) separated from each other by means of flight nodules (8), in order to receive sawn pieces, **characterized** in that the apparatus comprises a ranging device (24) provided with an adjusting device (11) arranged to set the mutual height position between the sawn piece (1, 2; 1a, 2a) and the free end (8a) of the flight nodule (8), and a stopping device (12), which is arranged to slow down or to stop the motion of at least one sawn piece (2; 2a) with respect to the conveyor (7) and another sawn piece, so that the slowed-down piece is shifted over the flight nodules to the next flight interval, successive in the shifting direction of the flight conveyor.

2. The apparatus of claim 1, **characterized** in that the stopping device (12) is a brush, which is arranged essentially transversally with respect to the conveyor (7).

3. The apparatus of claim 1 or 2, **characterized** in that the adjusting device is a hoist guide (11).

4. The apparatus of claim 3, **characterized** in that the height of the hoist guide (11) is adjustable.

5. The apparatus of any of the claims 1 - 5, **characterized** in that the brush (12) is vertically adjustable in order to regulate the sorting strength.

6. The apparatus of any of the claims 1 - 5, **characterized** in that the height of the flight nodule (8) is essentially twofold with respect to the height of the sawn piece, and the height of the hoist guide (11) is essentially equal or larger than that of the sawn piece.

7.  The apparatus of claim 1, **characterized** in that the apparatus comprises a control device (25), which is provided with a first sensor (14) for detecting at least the existence of a sawn piece in the flight interval (9) of the flight conveyor (7), and a second sensor (15) at least for detecting superimposed pieces; and a sorting device (17); and that a piece proved acceptable on the basis of the information given by the first and second sensors (14, 15) is allowed to proceed on the conveyor (7, 21) past the sorting device (17) to further treatment of sawn goods, and all pieces possibly causing disturbance in the further treatment, and/or pieces found defective, are taken aside from the conveyor (7) by means of the sorting device (17).

8.  The apparatus of claim 7, **characterized** in that the first sensor (14) comprises a photocell unit (14a, 14b), which is arranged transversally with respect to the transport direction (C) of the flight conveyor (7), and at an angle ($\alpha$) with respect to the plane of the flight conveyor (7).

9.  The apparatus of claim 7 or 8, **characterized** in that the second sensor (15) comprises a photocell unit (15a, 15b) which is arranged transversally with respect to the transport direction (C) of the flight conveyor (7), on a level parallel to the flight conveyor (7) at a distance (s) from the transport plane of the conveyor (7).

10. The apparatus of claim 9, **characterized** in that the distance (s) of the photocell unit (15a, 15b) from the transport plane of the conveyor (7) is adjustable.

11. The apparatus of claim 7, **characterized** in that the sorting device (17) comprises an intermediate conveyor (18), which is turnable, when necessary, to a sideways position (b) in order to take sawn goods aside from the flight conveyor (7), to among rejected pieces.

Fig.1

EP 0 458 281 A1

Fig.2

Fig.3

Fig.4

Fig.5

Fig.6

Fig.7

Fig.8

Fig.9

Fig.10

Fig.11

| | DOCUMENTS CONSIDERED TO BE RELEVANT | | EP 91108210.5 |
|---|---|---|---|

| Category | Citation of document with indication, where appropriate, of relevant passages | Relevant to claim | CLASSIFICATION OF THE APPLICATION (Int. Cl⁵) |
|---|---|---|---|
| A | US - A - 2 843 321 (SLOAN) * Fig. 1-3 * | 1 | B 65 G 47/46 B 07 C 5/14 |
| A | DE - A1 - 3 512 395 (MASCHINENFABRIK ESTERER AG) * Fig. 1,2 * | 1,7 | |

| | | | TECHNICAL FIELDS SEARCHED (Int. Cl⁵) |
|---|---|---|---|
| | | | B 07 C B 65 G |

The present search report has been drawn up for all claims

| Place of search | Date of completion of the search | Examiner |
|---|---|---|
| VIENNA | 25-06-1991 | PISSENBERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on, or after the filing date
D : document cited in the application
L : document cited for other reasons

& : member of the same patent family, corresponding document

EPO Form 1503 03 82